# EUROPÄISCHE PATENTSCHRIFT

(11) **EP 2 321 173 B1**
(45) Veröffentlichungstag und Bekanntmachung des Hinweises auf die Patenterteilung: **01.05.2013**
(21) Anmeldenummer: 09782269.6
(22) Anmeldetag: 27.08.2009
(51) Int. Cl.: B64C 1/18, B64C 1/06

(54) **STANGE ZUR ABSTÜTZUNG VON BAUTEILEN INNERHALB EINER RUMPFZELLENSTRUKTUR EINES FLUGZEUGS**
ROD FOR SUPPORTING COMPONENTS IN A FUSELAGE CELL STRUCTURE OF AN AIRCRAFT
BARRE DE SUPPORT POUR COMPOSANTS D'UNE STRUCTURE CELLULAIRE DU FUSELAGE D'UN AVION

(30) Priorität: 12.09.2008 DE 102008042036; 12.09.2008 US 191879 P
(43) Veröffentlichungstag der Anmeldung: 18.05.2011
(73) Patentinhaber: Airbus Operations GmbH, 21129 Hamburg (DE)
(72) Erfinder: BÜLLESBACH, Tim, 22761 Hamburg (DE)
(74) Vertreter: Isarpatent
(86) Internationale Anmeldenummer: PCT/EP2009/061060
(87) Internationale Veröffentlichungsnummer: WO 2010/028956

(56) Entgegenhaltungen:
- EP-A1- 1 319 453
- EP-A2- 1 090 697
- DE-A1- 10 057 566
- DE-A1-102006 019 123

## Beschreibung

Die Erfindung betrifft eine Stange zur Abstützung von Bauteilen innerhalb einer insbesondere mit faserverstärkten Verbundmaterialien gefertigten Rumpfzellenstruktur eines Flugzeugs, insbesondere zur Abstützung mindestens eines Fußbodengerüstes auf mindestens einem Ringspant und/oder mindestens einer weiteren Komponente innerhalb der Rumpfzellenstruktur.

In einer Rumpfzellenstruktur eines Passagierflugzeugs ist in der Regel mindestens ein Fußbodengerüst integriert, das unter anderem mit einer Vielzahl von hintereinander angeordneten, quer zur Flugrichtung verlaufenden Querträgern sowie hierauf in Längsrichtung der Rumpfzellenstruktur befestigten Sitzschienenprofilen gebildet ist. Unterhalb des Fußbodengerüstes befindet sich im Allgemeinen ein Frachtraum mit einem in geringem Abstand von der so genannten "Bilge" der Rumpfzelle verlaufenden Frachtraumfußboden. Das Fußbodengerüst bzw. die Querträger werden mittels geeigneter Stützstangen beispielsweise auf den Ringspanten innerhalb der Rumpfzellenstruktur abgefangen.

Vor allem aus Gründen der Gewichtseinsparung werden moderne Flugzeuge zunehmend mit Verbundmaterialien, insbesondere mit kohlefaserverstärkten duroplastischen Kunstharzen, hergestellt. In Einzelfällen werden schon heutzutage alle wesentlichen Komponenten der Rumpfzellenstruktur von Flugzeugen, insbesondere die Hautsegmente bzw. die Außenhaut, die Ringspanten, die Querträger sowie die Stringer einschließlich aller Anbindungswinkel mit CFK-Materialien gefertigt.

Über die Gewichtseinsparung hinaus verringert sich durch die Verwendung derartiger Verbundmaterialien der Wartungsaufwand, da insbesondere Korrosionseffekte im Falle einer geeigneten Materialzusammenstellung nur noch einen geringen Einfluss auf die Struktur haben.

Von Nachteil ist jedoch der erhöhte Reparaturaufwand an den bekannten CFK-Bauteilen. Im Fall von mechanischen Beschädigungen durch Steinschlag oder ähnliches ist eine Freifeldreparatur praktisch unmöglich. Daneben gestaltet sich die Erkennung von Rissen und/oder Delaminationen bei CFK-Bauteilen schwierig, da diese Fehlstellen häufig vom Inneren des Materials ausgehen und im Anfangsstadium oberflächlich nur schwer zu detektieren sind.

Auch kann eine CFK-Rumpfzellenstruktur aufgrund der im Vergleich zu metallischen Materialien deutlich reduzierten elektrischen Leitfähigkeit nicht mehr als gemeinsamer Rückleiter bzw. als Masse für die gesamte Flugzeugelektrik benutzt werden, so dass zusätzlich elektrische Rückleitungen vorzusehen sind.

Von Nachteil ist ferner, dass moderne CFK-Materialien aufgrund ihrer extrem hohen mechanischen Steifigkeit nur in geringem Maße plastisch verformbar sind, so dass die insbesondere in Unfallsituationen eines Flugzeugs auftretenden zwar kurzzeitigen, aber hohen mechanischen Spitzenbelastungen (so genannte "Crashlasten") nicht im erforderlichen Maße abgebaut werden können. In solchen kritischen Situationen neigen die bekannten CFK-Materialien beim Erreichen der mechanischen Grenzbelastung zum gefahrerhöhenden Splittern bzw. Durchbrechen. Im Einzelfall kann es aufgrund der Federwirkung der CFK-Materialien sogar zu einer Erhöhung der Crashlasten kommen.

Bekannte Ausführungsformen von Stützstangen bzw. Tragwerkstützen sind in der Regel mit stranggepressten Profilen gebildet, die mit einem metallischen Material, insbesondere mit einer hochfesten Aluminiumlegierung, hergestellt sind. Derartige Stützstangen dienen unter anderem zum Abfangen des Fußbodengerüstes auf den Ringspanten innerhalb einer Rumpfzellenstruktur eines Flugzeugs. Um einen Toleranzausgleich zu ermöglichen, sind diese Stützstangen vielfach längenverstellbar ausgestaltet und weisen in der Regel an beiden Enden einen Beschlag auf, mit denen eine gelenkige mechanische Anbindung der zu verbindenden Bauteile, beispielsweise eines Ringspantes und eines Querträgers, möglich ist. Infolge der Verwendung von vorzugsweise metallischen Materialien für die Herstellung der Stützstangen weisen diese zwar ein vorteilhaftes Crash-Verhalten auf, denn die Stangen sind in der Lage, einen relativ großen Anteil der in einer Unfallsituation eines Flugzeugs auftretenden mechanischen Energie durch eine plastische Eigenverformung zu absorbieren und damit für die Passagiere unschädlich zu machen. Im Vergleich zu den übrigen Komponenten einer CFK-Rumpfzelle weisen solche Stützstangen aus extrudierten Aluminiumlegierungen jedoch ein vergleichsweise hohes Gewicht auf.

Aus der EP 1 120 340 A2 ist eine Vorrichtung zur Verbesserung des Crash-Verhaltens eines Luftfahrzeugs, insbesondere eines Hubschraubers, bekannt. Unterhalb des Fußbodens befindet sich ein quaderförmiger Tank, der mit einem offenzelligen Schaummaterial gefüllt ist, das zumindest teilweise mit Treibstoff durchtränkt ist. In einer Unfallsituation, zum Beispiel im Fall einer sehr harten Landung bzw. eines Absturzes wird der Tank zusammengepresst und der Treibstoff zum Durchströmen des Schaummaterials gezwungen. Durch das erzwungene viskose Durchströmen in Verbindung mit der aufprallbedingten Deformation des Schaummaterials wird ein großer Teil der Aufprallenergie absorbiert. Von Nachteil bei dieser Ausführungsvariante ist jedoch das Gewicht, da ein zusätzliches Absorptionselement zur Aufnahme der Aufprallenergie mitgeführt wird, das jedoch im normalen Betrieb keine Lasten innerhalb der Rumpfzelle mit übernimmt.

Die Druckschrift EP 1 090 697 A2 offenbart eine Stange mit einer hohlzylindrischen Außenhülle, welche mit einer Ausschäumung ausgefüllt ist. Als Ausschäumung finden beispielsweise Kunststoffmaterialien oder Metalle Anwendung. Die Druckschrift DE 10 2006 019 123 A1 zeigt eine Rumpfzellenstruktur mit Stangen für ein Flugzeug. Die Druckschrift DE 100 57 566 A1 offenbart eine Stange mit einer mehrschichtigen Außenhülle, die mit einem Metallschaum ausgeschäumt ist.

Aufgrund der vorstehend aufgezeigten Nachteile der bekannten Ausführungsformen von Stützstangen zur Aussteifung von Rumpfzellenstrukturen sind diese nur bedingt für die Verwendung in Rumpfzellen geeignet, die mit CFK-Materialien gefertigt sind.

Aufgabe der Erfindung ist es daher, eine Stützstange zu schaffen, die im Vergleich zu den bekannten Ausführungsformen ein signifikant vermindertes Gewicht aufweist und die dennoch in der Lage ist, in einer Unfallsituation eines Flugzeugs auftretende hohe Spitzen-Crashlasten bzw. Unfalllasten durch eine plastische Verformung merklich zu vermindern.

Diese Aufgabe wird durch eine Stange mit den kennzeichnenden Merkmalen des Patentanspruchs 1 gelöst.

Dadurch, dass die Stange zumindest bereichsweise mit einem Metallschaum, insbesondere zur Absorption von Crashlasten, gebildet ist,
weist die erfindungsgemäße Stange im Vergleich zu den hergebrachten Stützstangen ein deutlich verringertes Gewicht auf, wobei gleichzeitig die Fähigkeit zur Absorption von hohen mechanischen Spitzenlasten in einer Unfallsituation eines Flugschen Spitzenlasten in einer Unfallsituation eines Flugzeugs gegenüber Stützstangen aus einem stranggepressten metallischen Vollmaterial verbessert ist.

Die zur Herstellung der erfindungsgemäßen Stange benötigten Schäume werden mittels der bekannten Verfahren hergestellt.

Eine vorteilhafte Ausgestaltung der Stange sieht vor, dass der Metallschaum mit einer Aluminiumlegierung gebildet ist. Durch die Verwendung von Aluminiumlegierungen für den verwendeten Metallschaum ergibt sich neben der erwünschten Gewichtsverringerung infolge der in die metallische Matrix des Metallschaums integrierten Hohlräume eine zusätzliche Gewichtsreduktion durch das leichtgewichtige Aluminiumlegierungsmaterial. Darüber hinaus lassen sich Aluminiumlegierungsmaterialien aufgrund ihres relativ niedrigen Schmelzpunktes von etwa 700 °C fertigungstechnisch recht leicht aufschäumen, so dass eine kostengünstige Produktion möglich ist.

Erfindungsgemäß weist die Stange einen Kern auf, der zumindest bereichsweise mit dem Metallschaum gebildet ist, wobei der Kern zumindest bereichsweise von mindestens einem Stützmantel und von mindestens einer Außenhülse bedeckt, insbesondere koaxial umgeben, ist. Infolge dieser Ausgestaltung wird es möglich, dass die normalen Lasten im Flugbetrieb im Wesentlichen vom Stützmantel bzw. ergänzend auch von der Außenhülse aufgenommen werden, während die in einer Crashsituation auftretenden hohen mechanischen Spitzenlasten nahezu allein durch eine plastische Deformation des Metallschaumkerns abgebaut werden. Darüber hinaus wird durch den Stützmantel ein unkontrolliertes Ausknicken des Metallschaumkerns im Crashfall verhindert, so dass die kinetische Energie fast ausschließlich durch das Zusammendrücken der im Metallschaum enthaltenen Kavitäten absorbiert wird und die Energieabsorption fast ausschließlich in einer Längsrichtung der Stange erfolgt. Daneben wird durch die Außenhülse das Eindringen von Feuchtigkeit und/oder Fremdpartikeln in den Metallschaumkern verhindert, so dass unerwünschte Korrosionseffekte, die die mechanische Festigkeit und/oder die Fähigkeit zur Absorption kinetischer Energie beeinträchtigen können, ausgeschlossen sind.

Weitere vorteilhafte Ausgestaltungen der Stange sind in weiteren Patentansprüchen dargelegt.

In der Zeichnung zeigt:
- **Fig. 1**: Eine schematische Querschnittsdarstellung des Aufbaus einer Rumpfzellenstruktur eines Flugzeugs,
- **Fig. 2**: eine Querschnittsdarstellung eines mittleren Abschnittes eines Beispiels einer Stange, und
- **Fig. 3**: eine Querschnittsdarstellung durch eine Ausführungsvariante einer Stange.

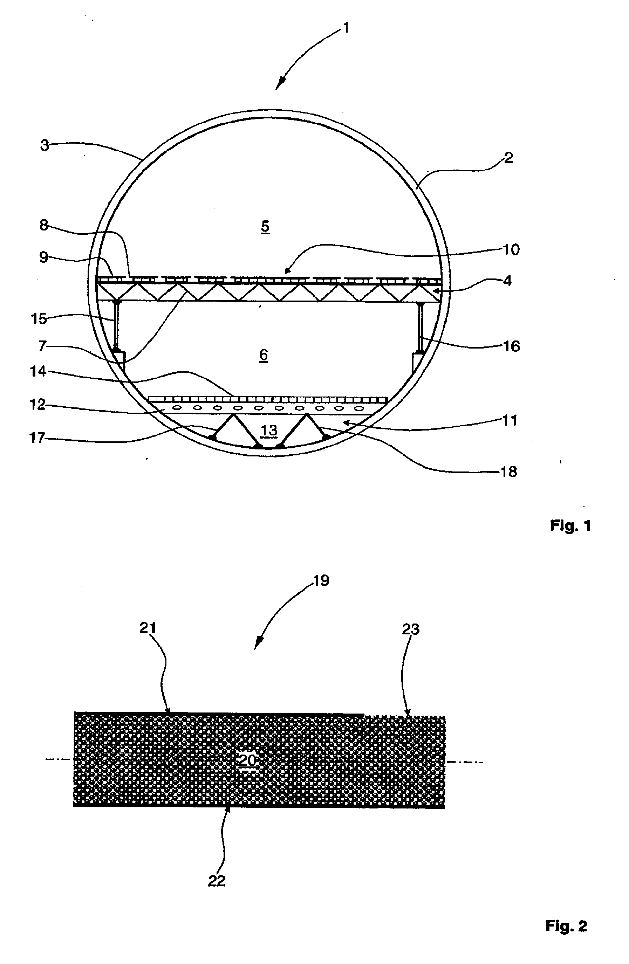

Die **Fig. 1** zeigt eine Querschnittsdarstellung durch eine Rumpfzellenstruktur eines Flugzeugs.

Eine Rumpfzellenstruktur 1 eines Flugzeugs umfasst eine Vielzahl von Ringspanten, von denen ein Ringspant 2 mit einer Bezugsziffer versehen ist. Die Rumpfzellenstruktur 1 ist vollständig mit einer Außenhaut 3 bzw. Außenhautsegmenten beplankt. Ferner verfügt die Rumpfzellenstruktur 1 über ein Fußbodengerüst 4, das die Rumpfzellenstruktur 1 in einen Passagierraum 5 und einen darunter liegenden, in der Regel kleineren Frachtraum 6 unterteilt. Das Fußbodengerüst 4 ist mit einer Vielzahl von Querträgern 7 aufgebaut, die jeweils quer zur Längsrichtung des Flugzeugs in etwa gleichmäßig zueinander beabstandet hintereinander liegend in einer Ebene angeordnet sind. Auf dem Querträger 7 verläuft senkrecht zur Zeichenebene, das heißt parallel zur Längsachse des Flugzeugs, eine Sitzschiene 8 parallel zu einer Vielzahl von weiteren Sitzschienen, die zum einen zur Aussteifung des Fußbodengerüstes 4 und zum anderen zur Befestigung von Sitzgruppen für Passagiere dienen. Zwischen den Sitzschienenprofilen liegen Fußbodenplatten 9 auf, die einen begehbaren Fußboden 10 bilden.

Ferner verfügt die Rumpfzellenstruktur 1 über ein Frachtraumgerüst 11, das entsprechend zum Fußbodengerüst 4 mit einer Vielzahl von Querträgern 12 gebildet ist. Unterhalb des Frachtraumgerüstes 11 befindet sich die so genannte "Bilge" 13, das heißt der tiefste Bereich innerhalb der Rumpfzellenstruktur 1. Auf den Querträgern 12 des Frachtraumgerüsts 11 liegt ein mittels einer Vielzahl von Bodenplatten gebildeter Frachtraumboden 14 auf.

Die Querträger 7,12 sind zum einen jeweils für sich im Bereich beider Enden mit dem Ringspant 2 verbunden. Zusätzlich stützt sich der Querträger 7 des Fußbodengerüstes 4 über zwei beidseitig, erfindungsgemäß angeordnete Stangen 15,16 auf dem Ringspant 2 ab, während das Frachtraumgerüst 11 unter anderem durch die beiden äußeren - gleichermaßen erfindungsgemäß ausgeführten - Stangen 17,18 auf dem Ringspant 2 abgefangen ist. Auf dieselbe Art und Weise sind alle weiteren Querträger des Fußbodengerüstes 4 sowie des Frachtraumgerüstes 11 durch Stangen auf dem Ringspant 2 abgestützt. Sämtliche erfindungsgemäß ausgestalteten Stangen verfügen über nicht mit einer Bezugsziffer versehene Beschläge, um eine in der Regel zumindest einseitig gelenkige Anbindung an die Querträger und die Ringspanten zu ermöglichen. Die Beschläge sind in der Darstellung der Fig. 1 mit schwarzen Halbkreisen lediglich angedeutet.

Die **Fig. 2** zeigt eine stark schematisierte Querschnittsdarstellung eines (mittleren) Abschnittes einer beispielhaften Stange. Eine Stange 19 ist vollständig mit einem Metallschaum 20 gebildet und weist eine in etwa zylindrische Gestalt auf. Eine Außenfläche 21 der zylindrischen Stange 19 verfügt in einem ersten Bereich 22 über eine glatte Oberfläche, das heißt, dass die Poren bzw. die mikroskopischen Hohlräume des Metallschaums 20 in diesem Bereich in sich geschlossen sind und eine durchgehende Ebene bilden. Ein zweiter Bereich 23 der Außenfläche 21 weist hingegen eine raue Oberfläche auf, was durch in dieser Zone zumindest im Außenbereich offene Poren des Metallschaums 20 erreicht wird. Die Außenfläche 21 ist im ersten Bereich 22 somit geschlossenporig, während der zweite Bereich 23 offenporig ausgebildet ist. In der Regel wird die Stange 19 entweder eine durchgehend geschlossenporige oder eine vollständig offenporige Außenfläche aufweisen.

Der Metallschaum 20 wird mittels der aus dem Stand der Technik bekannten Verfahren durch das Aufschäumen einer Aluminiumlegierung gebildet. Alternativ können in einem ersten Herstellungsschritt Aluminiumhohlkugeln gebildet werden, die in einem zweiten Verfahrensschritt beispielsweise durch Sintern zu einem einstückigen Metallschaum verbacken werden.

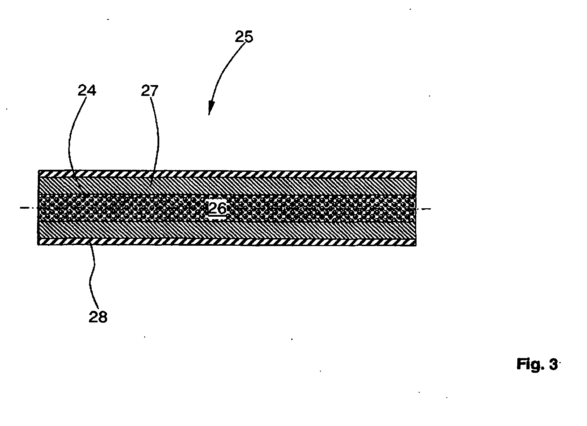

In der **Fig. 3** ist eine schematisierte Querschnittsdarstellung eines (mittleren) Abschnitts einer Ausführungsform einer mit einem Metallschaum gebildeten Stange zur Aufnahme von erhöhten mechanischen Crashlasten in einer Unfallsituation eines Flugzeugs zu sehen.

Ein bevorzugt zylindrisch ausgebildeter Kern 24 einer Stange 25 ist durchgehend mit einem Metallschaum 26 gebildet. Der Kern 24 ist koaxial von einem hohlzylindrischen Stützmantel 27 und dieser wiederum konzentrisch von einer hohlzylindrischen Außenhülse 28 umgeben. Der Metallschaum 26 besteht vollständig aus einer aufgeschäumten Aluminiumlegierung, während der Stützmantel mit einer Kernstruktur, wie beispielsweise einem aufgerollten Honigwabenkern mit geringer Materialstärke, gebildet ist. Anstelle eines Honigwabenkerns mit einer Vielzahl von aneinander schließenden sechseckförmigen, jeweils in sich geschlossenen Wabenzellen, kann auch ein drainagefähiger Faltwabenkern Verwendung finden. Die Außenhülse 28 ist bevorzugt mit einem faserverstärkten, duroplastischen Kunststoffmaterial, insbesondere einem kohlefaserverstärkten Epoxidharz oder einem glasfaserverstärkten Polyesterharz gebildet.

Durch den Stützmantel 27 ist unter anderem eine definierte räumliche Lage des Kerns 24 gewährleistet, so dass beispielsweise ein unkontrolliertes seitliches Ausknicken des Kerns 24 im Crashfall verhindert wird und ein möglichst großer Anteil der auftretenden kinetischen Verzögerungsenergie in eine plastische Umformung entlang einer Längsachse des Kerns 24 fließt. Die Außenhülse 28 schützt zum einen sowohl den Stützmantel 27 als auch den Kern 24 aus dem Metallschaum 26 vor schädlichen, das heißt insbesondere vor korrosiven atmosphärischen Einflüssen, kann zum anderen aber auch zumindest einen Teil der im üblichen Betrieb des Flugzeugs auftretenden Lasten über die Stange 25 überleiten.

Die erfindungsgemäß ausgestalteten Stangen verfügen im Verhältnis zu den bekannten Ausführungsformen von Stützstangen bzw. Tragwerkstützen über ein ausgezeichnetes Energieabsorptionsvermögen im Crashfall bei einem zugleich signifikant reduzierten Gewicht.

### Bezugszeichenliste

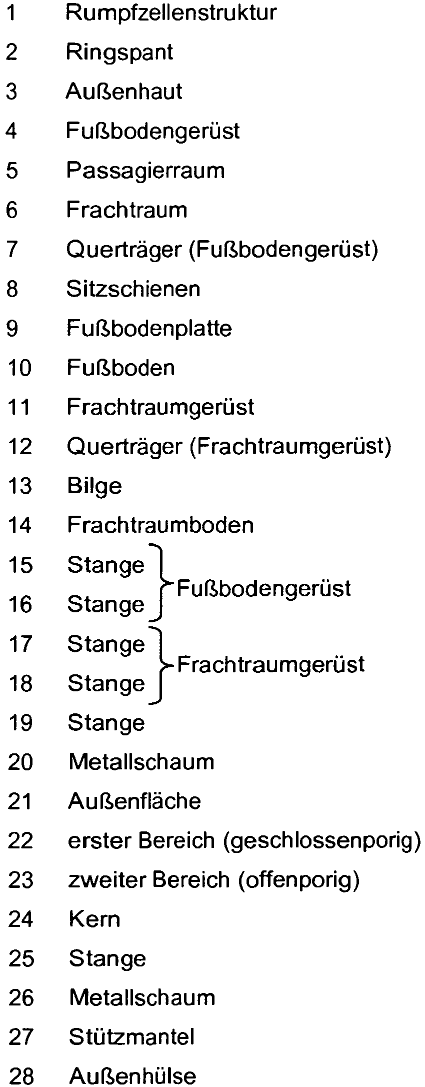

## Patentansprüche

1. Stange (25) zur Abstützung von Bauteilen innerhalb einer, insbesondere mit faserverstärkten Verbundmaterialien gefertigten, Rumpfzellenstruktur (1) eines Flugzeugs, mit:
einem mit einem Metallschaum (26) gebildeten Kern (24) zur Absorption von Crashlasten;
einem den Kern (24) koaxial umgebenden Stützmantel (27); und
einer mit einem faserverstärkten Kunststoffmaterial gebildeten, den Stützmantel (27) koaxial umgebenden Außenhülse (28),
**dadurch gekennzeichnet, dass** der Stützmantel (27) mit einem Honigwabenkern oder einem Faltwabenkern gebildet ist.

2. Stange (25) nach Patentanspruch 1, **dadurch gekennzeichnet, dass** der Metallschaum (26) mit einer Aluminiumlegierung gebildet ist.

3. Stange (25) nach einem der vorhergehenden Patentansprüche, **dadurch gekennzeichnet, dass** die Außenhülse (28) mit einem glasfaserverstärkten oder kohlefaserverstärkten Kunststoffmaterial gebildet ist.

4. Stange (25) nach einem der vorhergehenden Patentansprüche, **dadurch gekennzeichnet, dass** die beiden Enden der Stange (25) jeweils mit einem Beschlag, insbesondere einem Auge, zur Anbindung an die Rumpfzellenstruktur (1) versehen sind.

## Claims

1. Rod (25) for supporting components within a fuselage cell structure (1), in particular manufactured using composite materials, of an aircraft, comprising:
- a core (24), which is formed using a metal foam (26), for absorbing crash loads;
- a support casing (27), which coaxially encloses the core (24); and
- an outer sleeve (28), which is formed using a fibre-reinforced plastics material and coaxially encloses the support casing (27),
**characterised in that** the support casing (27) is formed using a honeycomb core or a folded honeycomb material.

2. Rod (25) according to claim 1, **characterised in that** the metal foam (26) is formed using an aluminium alloy.

3. Rod (25) according to any one of the preceding claims, **characterised in that** the outer sleeve (28) is formed using a glass-fibre-reinforced or carbon-fibre-reinforced plastics material.

4. Rod (25) according to any one of the preceding claims, **characterised in that** each of the two ends of the rod (25) is provided with a fitting, in particular an eye, for attachment to the fuselage cell structure (1).

## Revendications

1. Barre (25) destinée au support de composants à l'intérieur d'une structure de compartiment de fuselage (1) d'un avion, en particulier réalisée de matériaux composites renforcés par des fibres, comportant:
- une âme (24) formée d'une mousse métallique (26) pour absorber des charges de crash ;
- une enveloppe de support (27) entourant l'âme (24) de manière coaxiale ; et
- une gaine externe (28) formée d'un matériau de matière plastique renforcé par des fibres(27) et entourant de manière coaxiale l'enveloppe de support,
**caractérisée par le fait que** l'enveloppe de support (27) est conformée avec une âme en nid d'abeille ou une âme alvéolaire plissée.

2. Barre (25) selon la revendication 1, **caractérisée par le fait que** la mousse métallique (26) est formée d'un alliage d'aluminium.

3. Barre (25) selon l'une des revendications précédentes, **caractérisée par le fait que** la gaine extérieure (28) est formée d'une matière plastique renforcée par des fibres de verre ou d'une matière plastique renforcée par des fibres de carbone.

4. Barre (25) selon l'une des revendications précédentes, **caractérisée par le fait que** les deux extrémités de la barre (25) sont respectivement dotées d'une ferrure, en particulier d'un oeillet pour la liaison à la structure de compartiment de fuselage (1).
